# EUROPÄISCHE PATENTSCHRIFT

(11) **EP 0 648 149 B1**
(45) Veröffentlichungstag und Bekanntmachung des Hinweises auf die Patenterteilung: **04.12.1996**
(21) Anmeldenummer: 93913022.5
(22) Anmeldetag: 22.06.1993
(51) Int. Cl.: B03B 9/06, B03B 1/02, B07B 13/00, B29B 17/02

(54) **VERFAHREN ZUR SORTIERUNG VON THERMOPLASTEN AUS EINEM GEMENGESTROM**
PROCESS FOR SORTING THERMOPLASTIC SUBSTANCES FROM A MIXED FLOW
PROCEDE PERMETTANT DE TRIER DES THERMOPLASTIQUES DANS UN FLUX DE MELANGE

(30) Priorität: 24.06.1992 DE 4220666; 07.06.1993 DE 4318839
(43) Veröffentlichungstag der Anmeldung: 19.04.1995
(73) Patentinhaber: STRICKER, Urban, D-57271 Hilchenbach (DE)
(72) Erfinder: STRICKER, Urban, D-57271 Hilchenbach (DE)
(74) Vertreter: Valentin, Ekkehard, Dipl.-Ing.
(86) Internationale Anmeldenummer: EP9301583
(87) Internationale Veröffentlichungsnummer: WO9400241

(56) Entgegenhaltungen:
- DE-A- 4 033 249
- DE-C- 4 112 179
- FR-A- 2 430 798
- NL-A- 274 932

## Beschreibung

Die Erfindung betrifft ein Verfahren zum Sortieren wenigstens eines Zielthermoplasten aus einem unterschiedliche Sorten von Thermoplasten enthaltenden Gemenge, wobei dieses in einem Gemengestrom in einer Folge von Arbeitsschritten unter Verwendung einer Transport- und Erwärmungseinrichtung zunächst auf eine Temperatur gebracht wird, durch welche der Thermoplast mit der tiefsten Erweichungstemperatur - fallweise der Zielthermoplast - in den plastischen Zustand überführt wird, wonach dieser von den übrigen Teilen anderer Kunststoffsorten durch Sortierung getrennt wird.

Aus der DE-41 12 179 C1 ist ein Verfahren zum sortenreinen Trennen von thermoplastischen Formteilen unterschiedlicher Provenienz bekannt. Ausgehend von der Überlegung, daß sich jeder thermoplastische Kunststoff bei einer bestimmten Temperatur bzw. einem entsprechenden Temperaturintervall vom festen in den plastischen Zustand bei Erreichen seiner Erweichungstemperatur überführen läßt, sieht die Lehre des bekannten Verfahrens vor, daß die unterschiedlichen Formteile unzerkleinert durch direkte oder indirekte Beheizung auf eine Temperatur erwärmt werden, die der Erweichungstemperatur derjenigen Formteile mit der vergleichsweise niedrigsten Erweichungstemperatur entspricht. Die Formteile werden bei dieser Temperatur so lange behandelt, bis sie unter dem Einfluß der Schwerkraft ihre ursprüngliche Form unter Volumenreduzierung weitestgehend verloren haben. Anschließend werden die so zurückgebildeten Formteile von den übrigen, in ihrer Form im wesentlichen unverändert gebliebenen Formteilen getrennt, indem sie aufgrund ihrer Formunterschiede während ihres Transportes auf einer Rollenbahn sortiert werden, wobei die jeweils zurückgebildeten Formteile durch zwischen den Rollen gebildete Schlitze durchfallen und dort als einheitliche Fraktion entnommen werden, während die übrigen, in ihrer Form weitestgehend unverändert gebliebenen Formteile mit der Rollenbahn in Transportrichtung ausgetragen werden.

Das vorbekannte Verfahren ist einerseits unergiebig, weil die Zurückbildung bspw. eines Hohlkörpers in den flächenhaften Materialzustand zumeist eine längere thermische Einwirkungszeit erfordert, wobei andererseits das Verfahren auf ein eng begrenztes Spektrum von Formteilen wie Becher, Tassen oder Behälter eingeschränkt bleibt, und weil Gegenstände mit geschlossenen Formen, wie Flaschen, Behälter, Rohre oder dergleichen eine Umwandlung in einen deutlich unterschiedenen Formzustand nur schwer ermöglichen. Die Formsortierung erfordert zum einen eine besondere Erfassung und Logistik für Altprodukte, zum anderen lassen sich diese vorher nur mit einem technisch nicht zu vertretenden Aufwand zerstörungsfrei reinigen. Eine Reinigung ist aber erforderlich, da insbesondere Feuchtigkeitsreste die Thermobehandlung und damit das Verfahrensergebnis behindern. Im übrigen beruht die der Thermobehandlung nachgeschaltete Sortierung auf einer reinen Formsortierung.

In der FR-A-2 430 798 ist eine besondere Ausgestaltung eines Steinbrechers vom Typ Hammerbrecher mit einer Zweischeibenwalze mit Antriebswellen umfassenden Aufgabevorrichtung offenbart. Diese dient ausschließlich dem Zweck, einen Anteil von schätzungsweise 20% Unterkorn aus dem zu brechenden Aufgabegut zu entfernen, weil damit, wie dem Fachmann bekannt ist, die Brechleistung erhöht, der Verschleiß verringert, die Verstopfungsgefahr und daraus folgende Betriebsunterbrechungen vermieden und insgesamt die Betriebskosten wesentlich gesenkt werden. Von einer vorangehenden thermischen Behandlung zur selektiven Aufbereitung des Aufgabegutes ist hierbei keine Rede, insbesondere wohl auch deshalb, weil diese bei Temperaturen zwischen 1000 und 1200 °C stattfinden müßte. Weiterhin dienen die Scheiben der Aufgabevorrichtung nicht der Zerkleinerung, sondern sie haben lediglich die Aufgabe, das Aufgabegut so in Bewegung zu bringen, daß die unerwünschten Feinanteile vor der Aufgabe des Gutes in den eigentlichen Brecherraum abgetrennt und unmittelbar abgefördert werden.

In der DE-A-40 33 249 ist eine Kammwalzenvorrichtung zur Aufbereitung von polymeren Werkstoffen wie unvulkanisiertem Kautschuk oder dergleichen beschrieben. Bei der Vorrichtung ist lediglich bekannt, daß die Kammwalzen temperiert sind. Die Temperierung der Kammwalzen soll zum Ziel haben, daß ein zerklüftetes Polymermaterial für den folgenden Misch- oder Aufbereitungsprozeß bereitgestellt werden kann, das definierte Masseeigenschaften aufweist. Insbesondere soll eine definierte Viskosität und Plastizität des die Kammwalzenvorrichtung verlassenden zerklüfteten Polymermaterials einstellbar sein. Von einer Sortierung wenigstens eines Zielthermoplasten aus einem unterschiedliche Sorten von Thermoplasten enthaltenden Gemenge ist in dieser Druckschrift keine Rede.

Eine andere Vorrichtung ist aus der NL-A-274 932 bekannt, mit welcher Kunststoff-Formteile wie Becher erhitzt, sodann mit einer druckluftbetriebenen Preßeinrichtung in Form einer Platte zusammengedrückt und sodann in einer Schneidvorrichtung ähnlich einem Aktenvernichter in Streifen zerschnitten werden. Eine Sortierung von Zielthermoplasten aus einem Gemenge von Thermoplasten ist in dieser Druckschrift nicht ausgesprochen. Vielmehr ist zu erwarten, daß der geschnittene Kunststoff nicht sortenrein ist und ein minderwertiges Sekundärprodukt ergibt.

Der Erfindung liegt die Aufgabe zugrunde, ein Verfahren zur Sortierung von Thermoplasten aus einem Gemengestrom anzugeben, welches die vorgenannten Nachteile, Schwierigkeiten und technischen Grenzen überwindet und eine einwandfreie Sortierung aufgrund unterschiedlichen thermischen Erweichungsverhaltens der Thermoplaste mit hohem Ausbringen bei exakter Selektivität ermöglicht.

Die Lösung der gestellten Aufgabe wird bei einem Verfahren der eingangs genannten Art mit den kennzeichnenden Merkmalen des Anspruchs 1 erreicht.

Somit wird mit Vorteil eine exakte Sortierung nach Maßgabe des Erweichungsgrades einer Thermoplastsorte mittels des Erfassungsverhaltens einer Zerkleinerungseinrichtung in einem technischen Maßstab verwirklicht, der mit vergleichsweise geringem technischen Aufwand an Investitionen und Energie eine rationelle und wirtschaftliche sowie leistungsstarke Sortierung von Thermoplasten aus einem Gemengestrom ermöglicht. Insbesondere wird die notwendige aufzubringende Zerkleinerungsenergie im gesamten Aufbereitungsprozeß starkt vermindert.

Thermoplastische Kunststoffe weisen einen charakteristischen Temperaturbereich auf, in dem sie aus dem festen Zustand in den erweichten, gummielastischen Zustand übergehen. Wenn unterschiedliche Kunststoffsorten in einem Gemenge vorliegen, kann durch eine abgestufte Erwärmung eine Thermoplastsorte selektiv erweicht werden, während die übrigen Thermoplastsorten noch im festen Zustand vorliegen. Erweichte Thermoplaste haben im Gemengestrom zusammen mit noch harten Thermoplasten ein grundsätzlich unterschiedliches Verhalten. Dieser Unterschied wird mit Vorteil durch die Erfindung für eine selektive Zerkleinerung und damit für eine Sortierung mittels unterschiedlichen Einzugsverhaltens einer Zerkleinerungseinrichtung genutzt.

Beschaffenheit und Zusammensetzung des Gemengestromes muß zur erfolgreichen Durchführung des Verfahrens gewissen Bedinungen genügen. Dabei können vorsortierte Gemenge vor allem aus den Anwendungsbereichen Verpackung, Einweggeschirr, Haushalt etc., sofern sie nicht zu stark verunreinigt sind, mit dem Verfahren nach der Erfindung sortiert und dabei gleichzeitig zerkleinert werden. Dabei können andere Werkstoffe, die zum Teil auch im Verbund mit dem Zielthermoplasten vorliegen (Papieretiketten, Aluminiumdeckel) zunächst mit dem Zielthermoplasten zerkleinert werden. Von diesem können sie zu einem späteren Zeitpunkt in einer weiteren Aufbereitungsstufe oder auch während der Sekundärverarbeitung (Abscheiden aus der Schmelze) getrennt werden, sofern sie nicht in das Sekundärprodukt einbezogen werden können. Andere, nicht einer Produktgruppe zuordenbare Produktteile müssen für eine erfindungsgemäße Behandlung vorsortiert, vorzerkleinert und fallweise auch hinsichtlich ihrer Partikelgröße vorklassifiziert werden.

Im ersten, an sich bekannten Verfahrensschritt wird der Zielthermoplast durch Konvektions- oder Strahlungswärme im Bereich seiner Erweichüng erwärmt und dann im erweichten Zustand gemeinsam mit den anderen Materialien des Gemenges einer Zerkleinerungseinrichtung zugeführt. Die Erwärmung kann auf unterschiedliche Art und Weise hinsichtlich der Erweichung selektiv erfolgen. Durch Konvektionserwärmung kann der gesamte Gemengestrom erwärmt werden. Der Thermoplast mit der niedrigsten Erweichungstemperatur wird dabei als erster erweicht und ist somit erster Zielthermoplast. Durch Erwärmung mit Infrarot-Wärmestrahlen können bestimmte Thermoplaste aufgrund ihrer chemischen Zusammensetzung oder ihrer Einfärbung und dem damit verbundenen spezifischen Infrarot-Absorbtionsverhalten besser und somit gezielter als andere Materialien erwärmt werden. Mittels Hochfrequenzstrahlung können schließlich je nach Zusammensetzung des Gemengestroms bestimmte Thermoplaste selektiv erwärmt und erweicht werden, ohne daß die anderen Materialien ebenfalls erwärmt werden. Die Erwärmung erfolgt zweckmäßigerweise kontinuierlich in einer Erwärmungsstrecke, bei der das zu erwärmende Gut kontinuierlich, bspw. durch ein Transportband an Erwärmungselementen vorbeigeführt wird oder bei der das zu erwärmende Gut kontinuierlich mit Erwärmungselementen im Kontakt ist.

Der Gemengestrom, in dem nunmehr der Zielthermoplast im erweichten Zustand vorliegt, wird einer Zerkleinerungsvorrichtung zugeführt, welche infolge ihrer besonderen Ausbildung in der Lage ist, lediglich die erweichten Materialien einzuziehen und zu zerkleinern. Die härter gebliebenen Materialthermoplasten können diese Zerkleinerungsvorrichtung nicht passieren und werden von der Zerkleinerungsvorrichtung abgeführt.

Nach einer Ausführung des Verfahrens wird als Zerkleinerungsvorrichtung ein Zweiwellen-Schneidwerk verwendet, das auf achsparallelen Wellen angeordnete kreisförmige, miteinander kämmende Schneidmesser aufweist, die miteinander einen Einzugswinkel α und in Abhängigkeit von diesem Winkel α die Einzugstiefe h ausbilden. Dabei sind der Neigungswinkel β zwischen einer Tangentialebene an die Schneidenmesser und der Horizontalen und/oder der seitliche Neigungswinkel γ der beiden Wellen zur Horizontalebene sowie die Gestaltung der radialen Oberfläche der einzelnen Schneidmesser in Abstimmung mit der Größe der Produkte oder der Partikel des Gemenges und dem elastischen Verhalten der Materialkomponenten des Gemenges so aufeinander abgestimmt, daß eine selektive Erfassung von erweichten Thermoplasten durch das Schneidwerk stattfindet und die anderen Materialien des Gemenges den Aufgabebereich passieren, wobei der Einzugswinkel α im Bereich zwischen 5° und 175° möglichst groß, sowie der Neigungswinkel β im Bereich zwischen 95° und 175° möglichst klein und der Neigungswinkel γ zwischen 95° und 175° gewählt wird und die radiale Oberfläche der Schneidmesser eine Strukturierung aufweist. Zum Einstellen der Winkel α und β und/oder γ können alle oder ausgewählte Verbindungselemente der Wellen zum tragenden Gehäuse veränderlich einstellbar ausgeführt sein.

Eine andere Ausgestaltung des Verfahrens für eine selektive Sortierung von Thermoplasten aus einem Gemengestrom mit einer Transport- und einer Erwärmungsvorrichtung ist nach der Erfindung dadurch gekennzeichnet, daß die Zerkleinerung des Zielthermoplasten durch mehrere, eine Sägeebene bildende endlos umlaufende Sägedrähte oder Sägebänder oder durch eine Gattersäge vorgenommen wird, wobei diese so angeordnet werden, daß der aus der Transport- und Erwärmungseinrichtung kommende Materialstrom über eine Rutsche oder im freien Fall dem Aufgabebereich der Säge zugeführt wird und der Schneidwinkel ε der Sägen, ihre Laufrichtung und/oder Geschwindigkeit sowie die Spaltweite zwischen den einzelnen Sägeblättern nach Maßgabe der Partikelgröße des Gemenges sowie des plastischen Verhaltens der Materialkomponenten des Gemenges aufeinander abgestimmt werden.

Eine zweckmäßige Ausgestaltung des erfindungsgemäßen Verfahrens sieht weiter vor, daß die Zerkleinerungs vorrichtung beim Betrieb temperiert wird. Hierdurch wird die Fähigkeit der Einrichtungen zum selektiven Einzug bzw. Erfassen der vorerweichten Materialteile weiter aktiviert und verbessert.

Weitere Ausgestaltungen des Verfahrens zum Sortieren wenigstens eines Zielthermoplasten aus einem Gemenge von Thermoplasten sind entsprechend den Unteransprüchen vorgesehen.

Die Erfindung wird in schematischen Zeichnungen in bevorzugten Ausführungsformen gezeigt, wobei aus den Zeichnungen weitere vorteilhafte Einzelheiten der Erfindung entnehmbar sind. Es zeigen:
- Figur 1a bis: ein gegenläufig kämmendes Zweiwellenschneidwerk,
- Figur 1c: - in Frontansicht (Figur 1a)
- in Seitenansicht (Figur 1b)
- in Draufsicht (Figur 1c);
- Figur 2: eine Seitenansicht des Zweiwellenschneidwerks gemäß Fig. 1b mit Aufgabetrichter und Abreinigungseinrichtung
- Figur 3: eine vergrößerte Darstellung des Zweiwellen-Schneidwerks in Draufsicht;
- Figur 3a: im Detail ein Stück strukturierter Oberfläche eines kreisförmigen Messers;
- Figur 4: in Frontansicht das Zweiwellen-Schneidwerk in relativ zur Horizontalen seitlich geneigter Position;
- Figur 5: ein das Verfahren sowie die zugeordnete Vorrichtung darstellender Stammbaum;
- Figur 6: ein das Verfahren sowie eine zugeordnete alternative Vorrichtung darstellender Stammbaum;
- Figur 6a: im Detail Sägezähne eines Sägeblattes.

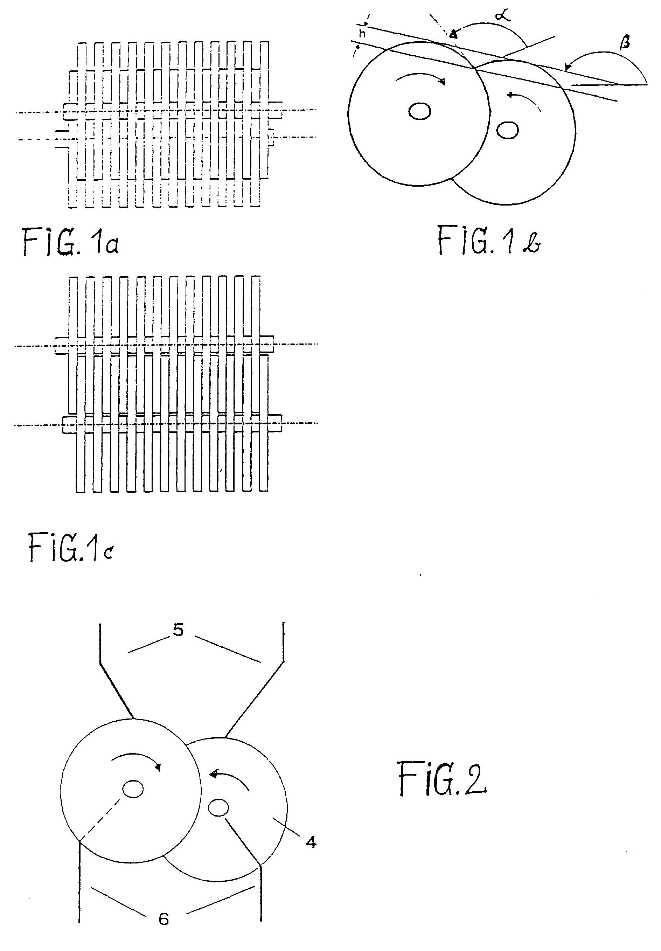

Die in den Figuren 1 bis 5 dargestellte Zerkleinerungsvorrichtung weist ein gegenläufig kammendes Zweiwellen-Schneidwerk auf. Dabei werden die auf den Wellen angeordneten kreisförmigen Schneidmesser 4 sehr tiefkämmend angeordnet, um den Einzugswinkel α möglichst groß zu halten. Die Schneidmesser 4 sind für die meisten Anwendungsfälle zahnlos als kreisförmige Scheiben ausgeführt. Infolge dieser Ausgestaltung wird ein Einziehen harter Materialien in die Schneidmesser 4 vermieden. Bei genauer Kenntnis der Beschaffenheit und Zusammensetzung des zu selektierenden Materials kann die Schneidvorrichtung auch mit am Umfang gezahnt ausgeführten Schneidmessern 4 ausgestattet sein.

Die beiden Wellen werden in ihrer Einbauhöhe versetzt zueinander angeordnet, wie dies insbesondere aus den Figuren 1 und 2 ersichtlich ist. Die dadurch entstehende Neigung der Aufgabeebene ist in der Figur 1b mit dem Winkel β der tangentialen Ebene an die Schneidmesser 4 gegenüber der Horizontalen gekennzeichnet. Diese Anordnung der Schneidmesser 4 begünstigt ein erwünschtes Wegführen harter Materialien von dem Einzugsspalt. Die Nutzung der durch den Winkel β vorgegebenen Neigung kann bspw. in einigen Fällen ausreichen, um eine selektive Zerkleinerung der Materialien zu unterstützen.

Eine Begrenzung der Aufgabefläche durch seitliche Leitbleche 5 entsprechend einer Darstellung in Figur 2 dient einer sicheren Zuführung und Abführung sowohl der zu zerkleinernden als auch der abzuführenden Thermoplasten.

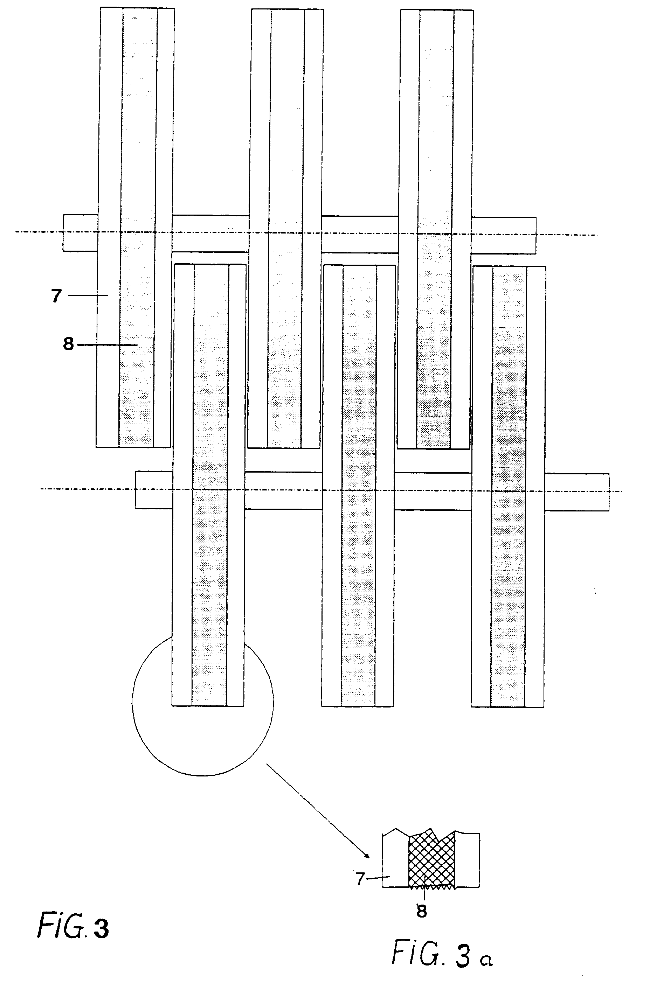

Der Einzug von erweichten thermoplastischen Kunststoffen ist dadurch ermöglicht, daß diese sich mindestens teilweise adhäsiv an die Schneidmesser 4 infolge ihrer Plastizität anpassen und dann durch den Gegenlauf der Messer 4 zum Schneidspalt hingezogen und erfaßt werden, wobei sie aufgrund ihrer Elastizität stumpf geschnitten, gequetscht und schließlich eingezogen werden. Der Einzug von erweichten, sich an die Oberfläche der Messer 4 anschmiegenden Thermoplasten kann dadurch unterstützt werden, daß die Peripherie der Schneidmesser ganz oder teilweise mit einer Strukturierung versehen ist. Eine solche Strukturierung ist in der Figur 3a gezeigt, wobei mit der Ziffer 7 eine glatte Oberfläche und mit der Ziffer 8 eine strukturierte Oberfläche rein schematisch dargestellt ist. Diese Strukturierung kann in Form einer Rändelung oder in Form von relativ kleinen Zahnwellen ausgeführt sein. Sie soll eine erhöhte Reibung von erweichten Thermoplasten ermöglichen. Gleichzeitig soll aber durch die im wesentlichen flächenhaft radiale Oberfläche der Schneidmesser 4 ein Abprallen bzw. Abweisen von härteren Materialien bewirkt werden.

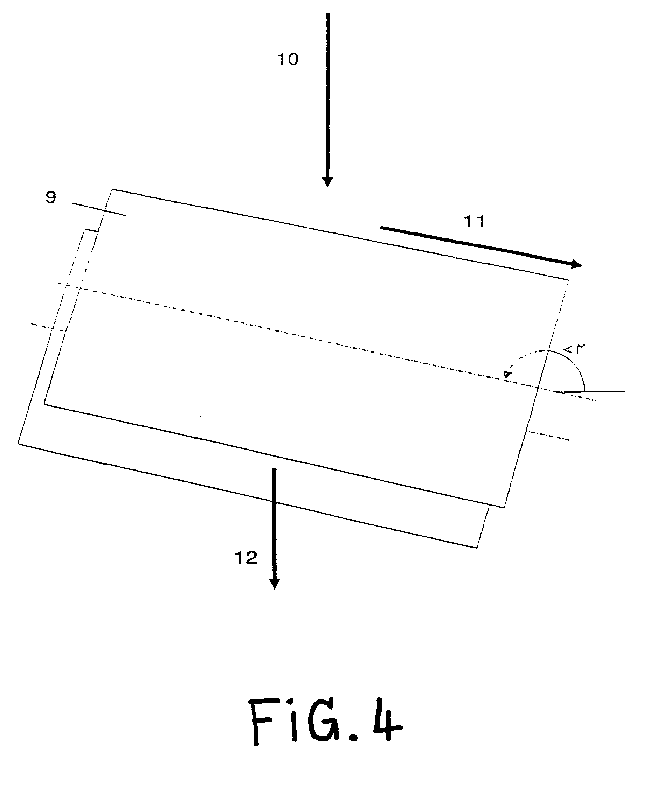

Die separate Abführung von nicht in den Schneidspalt gelangenden härteren Thermoplasten kann dadurch erzielt werden, daß das gesamte Schneidwerk in seiner Breite entsprechend der Darstellung in Figur 4 mit einem Winkel γ von unter 90° relativ zur Lotrechten hin angeordnet ist. Das Aufgabegut 10 fällt zunächst in Lotrichtung auf das Schneidwerk 9. Harte Materialien werden nicht eingezogen und verlassen die Aufgabefläche aufgrund der Neigung γ des Schneidwerkes 9 und infolge ihrer Schwerkraft in seitlicher Richtung entsprechend dem Pfeil 11. Erweichte Zielthermoplaste 12 werden vorn Schneidwerk 9 eingezogen, passieren es und verlassen es nach unten in zerkleinertem Zustand.

Um ein sicheres Lösen der das Schneidwerk passierenden erweichten Zielthermoplasten von den Schneidmessern 4 zu gewährleisten, kann das Schneidwerk 9 in seinem unteren Bereich mit Kämmen 6 versehen sein, die an den Schneidmessern 4 anhaftende Thermoplasten oder Thermoplastenreste abrakeln. Eine solche Anordnung ist rein schematisch in der Figur 2 mit den Rakelkämmen 6 gezeigt.

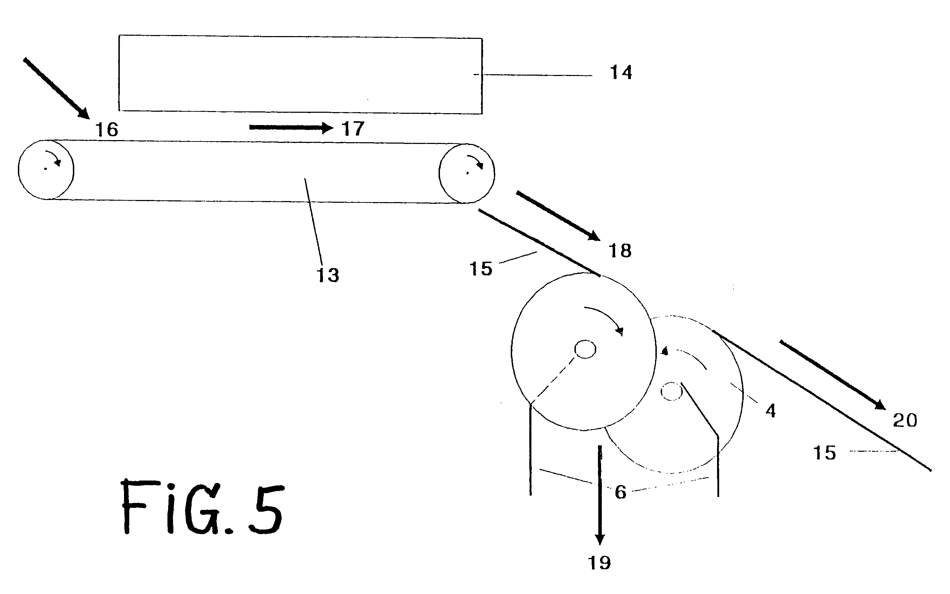

Nach Maßgabe der Beschaffenheit und Zusammensetzung des zum Schneidwerk 9 gelangenden Gemengestromes kann bei genügend kleinem Winkel β fallweise auf eine Neigung des Schneidwerkes 9 um den Winkel γ verzichtet werden. Das Schneidwerk 9 wird dann gemäß Figur 5 so angeordnet, daß die Zuführung des Gemengestromes 18 und die Abführung 19 der nicht eingezogenen, harten Materialien über Führungen 15 erfolgt, die in etwa den Winkel β der Aufgabeflächen verlängern. Dabei ist der zugeführte Gemengestrom mit dem Pfeil 18 und der abgeführte Teilstrom mit dem Pfeil 20 bezeichnet. Die geschnittenen und aussortierten Teile des Zielthermoplasten sind mit dem Pfeil 19 bezeichnet. Zum Abrakeln der kreisförmigen Messer 4 sind die Rakelkämme 6 vorgesehen.

In der Figur 5 ist zugleich mit einem Verfahrens-Stammbaum rein schematisch eine komplette Vorrichtung nach der Erfindung gezeigt. Sie umfaßt eine Erwärmungsstrecke 17 mit einem Transportband 13 und über diesem angeordnet mindestens ein Erwärmungselement 14 bspw. einen Infrarot-Strahler oder eine Hochfrequenzquelle. Mit 16 ist die Gemengeaufgabe gekennzeichnet, während das erwärmte und vom Transportband 13 abfließende Gemenge mit dem Pfeil 18 bezeichnet ist. Der Austrag des zerkleinerten Zielthermoplasten ist mit 19, der Austrag der anderen Komponenten des Gemenges mit 20 auf der Rutsche 15 bezeichnet.

### Anwendungsbeispiel:

Joghurtbecher aus Kunststoff sind in der BRD aus Polypropylen (PP) oder Polystryrol im Ausland auch aus Polyvinylchlorid (PVC) gefertigt. Eine Sortierung oder Trennung der Kunststoffsorten ist eine Voraussetzung für die hochwertige Wieder- oder Weiterverarbeitung der Kunststoffe.

Eine Trennung aller drei als Joghurtbecher verwendeten Kunststoff-Verpackungswerkstoffe kann durch eine im Folgenden beschriebene erfindungsgemäße Vorrichtung erfolgen.

Die Verpackungen werden im unzerkleinerten Zustand einer Vorrichtung aufgegeben, in der sie auf ein Transportband 13 gelangen. Das Transportband 13 durchläuft eine Erwärmungsstrecke 17, wobei durch eine geeignete Abstimmung zwischen Bandgeschwindigkeit, Länge der Erwärmungsstrecke 17 sowie Wärmezufuhr durch ein Heizelement 14 zunächst nur das PVC selektiv erweicht wird (Guttemperatur ca. 80°). Das gesamte Gut fällt dann auf ein erstes selektierendes Schneidwerk, wie es oben beschrieben ist. Das PVC durchläuft das Schneidwerk und wird einer Bevorratung zugeführt, das PS und das PP werden entweder über eine seitliche Neigung (Winkel γ) oder eine Neigung in Transportrichtung (Winkel β) abgeführt und gelangen auf ein weiteres Transportband, wobei in einer zweiten Erwärmungsstrecke das PS selektiv erweicht wird (ca. 105°C). In einem zweiten selektierenden Schneidwerk wird das PS zerkleinert und das PP abgeführt. Alle drei Kunststoffsorten sind somit sortenrein getrennt.

Von Vorteil bei diesem Anwendungsfall ist, daß die beteiligten Thermoplaste bereits weit unterhalb ihres Schmelzebereichs erweichen, und somit Emissionen von gasförmigen Abbauprodukten der Kunststoffe ausgeschlossen und Prozeßbehinderungen durch ein Verschmieren der erweichten Thermoplasten im Schneidwerk nicht zu erwarten sind. Sollen nur zwei Sorten getrennt werden (PS und PP) genügt eine entsprechend einfachere Ausführung. Eine solche vereinfachte Ausführung gestattet den dezentralen Einsatz von kompakten Vorrichtungen bei der Sammlung von Altkunststoffen, was einen weiteren Anwendungsvorteil aufgrund der mit dem Prozeß verbundenen Volumenreduktion der Altprodukte bedeutet.

In analoger Weise lassen sich auch andere Kombinationen von thermoplastischen Kunststoffsorten, wie sie in anderen Anwendungsbereichen anfallen, voneinander trennen. Bspw. ist so die Trennung von PVC, PE, PP und PET aus dem Anwendungsbereich Hohlkörper möglich.

Vorzerkleinerte und vorzugsweise gewaschene Gemenge von Kunststoffschnitzeln, die auch aus unterschiedlichen Anwendungen stammen können, sind ebenfalls dem erfindungsgemäßen Verfahren zugänglich. Zur Sortierung von mehreren Zielthermoplasten können die erfindungsgemäßen Vorrichtungen kaskadenartig hintereinandergeschaltet werden. Um den Einzug von bei solchen Gemengen zu erwartenden kleinen Partikeln in das erste selektierende Schneidwerk zu vermeiden, wird das Partikelgemenge zweckmäßigerweise zuvor gesiebt, so daß nur genügend große Partikel zur Behandlung gelangen.

Eine Optimierung der Vorrichtung und nach der Erfindung gelingt je nach dem Anwendungsfall durch Verwendung geeigneter Wärmequellen für die selektive Erwärmung (Konvektion, IR- oder HF-Strahlung) sowie durch die sachgerechte Einstellung des Wärmemengeneintrags, der durch die Parameter Bandgeschwindigkeit, Bandlänge und Anordnung der Wärmeelemente bestimmt wird. Auch Variationen in der Ausführung des selektierenden Schneidwerkes hinsicht der Schneidmesser-Oberflächengestaltung, des Einzugswinkels α, der Einzugstiefe h und der Neigungswinkel β und γ sowie die Einbindung des Schneidwerkes in den gesamten Materialfluß können für einen bestimmten Anwendungsfall optimierend genutzt werden. Eine Veränderbarkeit der Schneidwerk-Parameter h, α, β und γ kann dadurch ermöglicht werden, daß die entsprechenden Verbindungen an den Lagern des Schneidwerkes konstruktiv als veränderlich einstellbar ausgelegt werden. Darüberhinaus kann das Schneidwerk temperiert werden und somit der Einzug von vorgewärmten Zielthermoplasten verbessert werden. In ausgewählten Fällen kann der Zielthermoplast auch durch Kontakt mit dem temperierten Schneidwerk erweicht und von diesem eingezogen werden.

Die als Zweiwellen-Schneidwerk ausgebildete Zerkleinerungsvorrichtung erfordert wegen der gegenläufig miteinander kämmenden, kreisförmigen Schneidmesser zur Erzielung eines genügend flachen Einzugswinkels einen vergleichsweise großen Durchmesser dieser Schneidmesser. Auch hat es sich als zweckmäßig erwiesen, nach Maßgabe der Beschaffenheit der aufgegebenen Kunststoffkomponenten im unterschiedlichen Härte- bzw. Erweichungszustand den Durchmesser der Schneidmesser des Zweiwellen-Schneidwerks zumindest annähernd an Größe und Form der Thermoplastenteile anzupassen. Weiterhin hat es sich als zweckmäßig erwiesen, den Grad der radialen Oberflächenstrukturierung der Schneidmesser an die Elastizitätsunterschiede der zu sortierenden Thermoplastenteile anzupassen.

Die Gegebenheiten können durch eine andere Ausgestaltung der erfindungsgemäßen Zerkleinerungsvorrichtung variiert werden. Es hat sich überraschenderweise herausgestellt, daß ein selektiver Einzug von Thermoplastenteilen im erweichten Zustand mit dadurch erreichbar selektiver Zerkleinerung als Grundlage der Sortierung dann zu besonders guten Resultaten führt, wenn die Zerkleinerungsvorrichtung durch mehrere eine Sägeebene bildende endlos umlaufende Sägedrähte oder -bänder oder durch eine Gattersäge gebildet wird, wobei die Zerkleinerungsvorrichtung so angeordnet ist, daß der aus der Transport- und Erwärmungseinrichtung kommende Materialstrom über eine Rutsche oder im freien Fall dem Aufgabebereich der Säge zugeführt wird, und die Schneidenwinkel der Sägen, ihre Laufrichtung und Geschwindigkeit sowie die Spaltweite zwischen den einzelnen Sägen so aufeinander abgestimmt sind, daß sich infolge der mit der Art der Zuführung des Materialstroms durch Schwerkraft und/oder zusätzliche Beschleunigung hervorgerufenen Andruckkraft beim Auftreffen der Materialteile auf die Sägeebene, sowie infolge von Größe bzw. Masse der Materialteile ein selektives Erfassen und Zerteilen von erweichten Thermoplasten ergibt und diese die Säge passieren, wogegen infolge eines einstellbaren Neigungswinkels der Sägeebene zur Wirkrichtung der Andruckkraft und fallweise infolge einer Förderwirksamkeit der Sägen eine Ableitung nicht erweichter Materialien von der Sägeebene erfolgt und diese separat abgeführt werden.

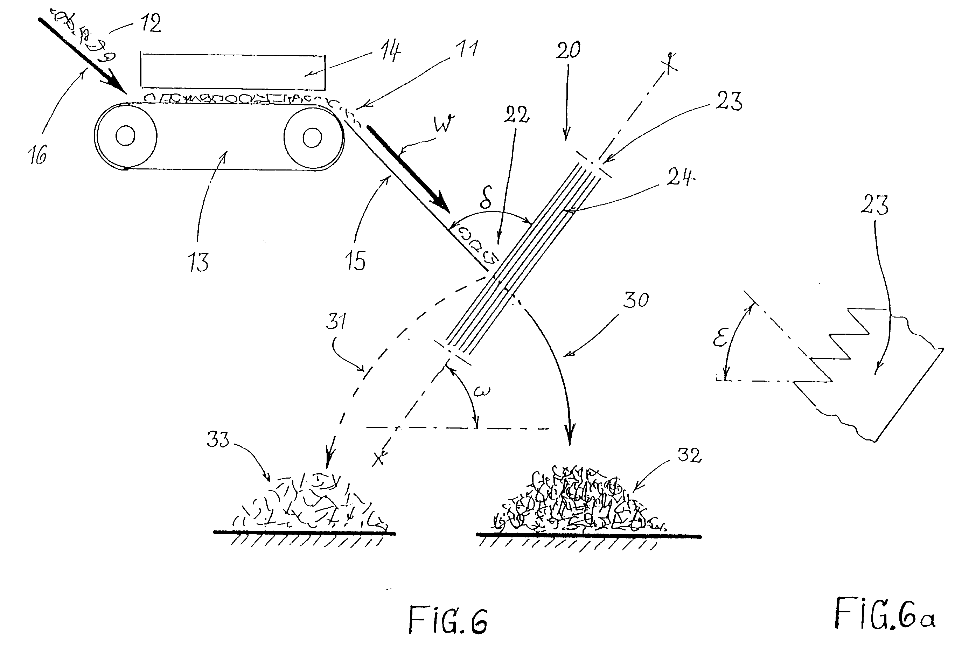

Gemäß Figur 6 wird ein Gemengestrom 12 zu sortierender Thermoplasten an der Aufgabe 16 der Transporteinrichtung 13 aufgegeben und beim Transport zum Abgabeende mit Hilfe einer Erwärmungseinrichtung 14 bis zum Erweichungspunkt derjenigen Komponente erwärmt, welche den niedrigsten Erweichungspunkt aufweist, bspw. in einem Intervall zwischen 95° und 105°. Somit liegen am Austrag 11 der Transporteinrichtung 13 im erwärmten Gemengestrom W erweichte und nicht erweichte thermoplastische Partikel zusammen vor. Diese gelangen auf der Rutsche 15 zum Teil unter Schwerkraft und fallweise auch unter Beschleunigung einer beliebigen Beschleunigungseinrichtung auf die Sägeebene x-x. Damit wird der erweichte Thermoplast enthaltende Materialstrom W dem Einzugsbereich 22 einer Zerkleinerungsvorrichtung 20 zugeführt. Diese besteht entweder aus endlos umlaufenden Sägeblättern 23 bzw. Sägedrähten 24 oder ist als Gattersäge ausgebildet. Dabei sind die Sägeelemente nebeneinander so angeordnet, daß sich als Einzugsbereich 22 eine von den Sägeelementen 23 bzw. 24 aufgespannten Ebene x-x ergibt, die im folgenden als Sägeebene x-x- bezeichnet wird. Zur Erhöhung der Verfahrenssicherheit können mehrere Sägeebenen x-x- hintereinander angeordnet sein.

Die Zuführung des Materialstroms W zur Sägeebene x-x kann im einfachsten Falle allein durch Schwerkraftwirkung erfolgen. Unter zusätzlichem Einsatz von Beschleunigungsvorrichtungen können aber auch beschleunigte Partikel in den Einzugsbereich 22 gebracht werden. Solche Beschleunigungsvorrichtungen können z. B. schnell laufende Transportbänder, Zentrifugalbeschleuniger oder gerichtete Druckluftdüsen sein. In letzterem Falle kann die Druckluft mit der Temperatur der erweichten Komponente zugeführt werden.

Die Sägeebene x-x befindet sich in einem Winkel δ zwischen 10° und 90° zur Zuführungsrichtung des Materialstroms W. Somit ergibt sich entweder aus der Schwerkrafteinwirkung oder auch durch Beschleunigung einer Andruckkraft der Materialteile auf die Sägeebene x-x. In Abstimmung mit der Maßgabe von Sägezahngestaltung, Sägegeschwindigkeit und Winkel δ erreichbaren Sägewirkung wird diese Anpreßkraft so gewählt, daß sich ein Einzug und Zerteilen von erweichten Kunststoffen ergibt, während nicht erweichte Kunststoffteile von der Säge nicht erfaßt und auch nicht zerteilt werden. Die Sägeebene x-x bildet mit der Horizontalen einen einstellbaren Winkel w.

Die Teile des Materialstroms W sollen vorteilhaft eine den Spalten zwischen den einzelnen Sägeelementen 23 bzw. 24 angepaßte Größe aufweisen, und zwar derart, daß sie eine genügende Größenordnung besitzen, um nicht unzerkleinert die Sägeebene x-x passieren zu können. Hierbei kann die vorgängig angeführte Maßnahme eine Hintereinanderanordnung mehrere Sägeebenen x-x erhöhte Verfahrenssicherheit bewirken. Diese Sägeebenen x-x können mit gestaffelten, zur Austrittsseite enger werdenden Spalten zwischen den Sägeblättern oder Sägedrähten ausgebildet sein. Weiterhin ist es zweckmäßig, diese gestaffelten Sägeebenen so anzuordnen, daß sie nicht mit durchgängigen Spalten oder Durchlässen, sondern mit rautenartigen Durchlässen hintereinander angeordnet sind.

Die Sägeebene x-x kann in einem Winkel w zur Horizontalen bzw. in einem komplementären Winkel zur vertikalen Ebene so angeordnet sein, daß nicht erweichte Materialteile 31 aufgrund ihrer Schwerkraft von der Sägeebene x-x abgeleitet werden. Wenn dabei endlos umlaufende Sägeelemente 24 verwendet werden, ergibt sich fallweise auf der Sägeebene x-x eine Förderwirksamkeit, die zusätzlich zur Ableitung der nicht erweichten Materialteilchen 31 genutzt wird. Dabei werden die erweichten Materialteile 30 nach Passieren der Säge 23 zum Haufwerk 32 ausgetragen, wogegen die nicht erweichten Teilchen 31 zum Haufwerk 33 ausgetragen werden.

Mit der Ausgestaltung der Zerkleinerungseinrichtung 20 als Säge 23, 24 unter Bildung einer Sägeebene x-x, mit deren Einstellbarkeit im Winkel δ zur Auftreffrichtung des Materialstroms W sowie zur Horizontalen im Winkel (δ) ferner unter Einstellung der Spalte zwischen den einzelnen Sägeblättern und Sägedrähten 23 bzw. 24 ist eine selektive Erfassung und Zerkleinerung von Kunststoffsorten mit unterschiedlichem Erweichungsgrad und somit eine sichere, wirtschaftliche und leistungsstarke Sortierung unterschiedlicher Kunststoffsorten möglich. Bei dem hierbei abzustimmenden Erfassungs- und Einzugsverhalten der Sägeblätter 23 bzw. 24 ist auch eine Optimierung der Sägezahnform und des Schneidwinkels von Bedeutung und wird vom Fachmann nach Erfahrung und handwerklichem Ermessen der jeweiligen spezifischen Materialbeschaffenheit der erweichten thermoplastischen Komponenten angepaßt werden.

## Patentansprüche

1. Verfahren zum Sortieren wenigstens eines Zielthermoplasten aus einem unterschiedliche Sorten von Thermoplasten enthaltenden Gemenge, wobei dieses in einem Gemengestrom (18) in einer Folge von Arbeitsschritten unter Verwendung einer Transport (13)- und Erwärmungseinrichtung (14) zunächst auf eine Temperatur gebracht wird, durch welche der Thermoplast mit der tiefsten Erweichungstemperatur - fallweise der Zielthermoplast - in den plastischen Zustand überführt wird, wonach dieser von den übrigen Teilen anderer Kunststoffsorten durch Sortierung getrennt wird,
**dadurch gekennzeichnet,**
daß der aus der Transport(13)- und Erwärmungseinrichtung (14) kommende und durch Erwärmung in selektiv erweichten Zustand versetzte Zielthermoplaste und andere nichterweichte Thermoplaste enthaltende Gemengestrom (18) über eine Rutsche oder im freien Fall mit einer durch Schwerkraft und/oder zusätzliche Beschleunigung erzielbaren Andruckkraft gegen den Aufgabe- und Einzugsbereich einer Zerkleinerungseinrichtung (4, 20) gefördert und dabei die Teile des erweichten Zielthermoplasten (12, 19, 32) erfaßt und zerkleinert und die übrigen nichterweichten Teile des Gemenges unzerkleinert vom Einzugsbereich der Zerkleinerungseinrichtung (4, 20) abgeführt werden.

2. Verfahren nach Anspruch 1,
**dadurch gekennzeichnet,**
daß zur Sortierung durch selektiven Einzug des Zielthermoplasten in die Zerkleinerungseinrichtung (4, 20) einerseits die Plastizität des Zielthermoplasten eingestellt, andererseits bei der Zerkleinerungseinrichtung (4, 20) Schneidmesser (4) mit gezahnten oder Zahnwellen oder Rändelungen aufweisenden Oberflächen verwendet werden.

3. Verfahren nach Anspruch 1 oder 2,
**dadurch gekennzeichnet,**
daß die Zerkleinerung des Zielthermoplasten durch mehrere eine Sägeebene (x-x) bildende endlos umlaufende Sägedrähte oder -bänder (24) oder durch eine Gattersäge (23) vorgenommen wird, wobei diese so angeordnet werden, daß der aus der Transport- (13) und Erwärmungseinrichtung (14) kommende Materialstrom (18) über eine Rutsche (15) oder im freien Fall dem Aufgabebereich (22) der Säge (23, 24) zugeführt wird und der Schneidenwinkel (ε) der Sägen (23, 24), ihre Laufrichtung und/oder Geschwindigkeit sowie die Spaltweite zwischen den einzelnen Sägeblättern nach Maßgabe der Partikelgröße des Gemenges sowie des plastischen Verhaltens der Materialkomponenten des Gemenges aufeinander abgestimmt werden.

4. Verfahren nach einem oder mehreren
der Ansprüche 1 bis 3,
**dadurch gekennzeichnet,**
daß die Zerkleinerungseinrichtung (4, 20) beim Betrieb temperiert wird.

5. Verfahren nach einem oder mehreren
der Ansprüche 1 bis 4,
**dadurch gekennzeichnet,**
daß die Zerkleinerungseinrichtungen durch Abstreifvorrichtungen wie Bürsten etc. von anhaftenden Kunststoffteilchen abgereinigt werden.

6. Verfahren nach einem oder mehreren
der Ansprüche 1 bis 5,
**dadurch gekennzeichnet,**
daß mehrere Zerkleinerungseinrichtungen (4, 20) hintereinander angeordnet werden, derart, daß insbesondere bei einer Säge mehrere Sägeebenen (x-x) miteinander rautenförmige Durchlässe ausbilden.

7. Verfahren nach einem oder mehreren
der Ansprüche 1 bis 6,
**dadurch gekennzeichnet,**
daß als Zerkleinerungseinrichtung (4, 20) ein Zweiwellen-Schneidwerk verwendet wird, das auf achsparallelen Wellen angeordnete kreisförmige, miteinander kämmende Schneidmesser (4) aufweist, die miteinander einen Einzugswinkel (α) und in Abhängigkeit von diesem Winkel (α) die Einzugstiefe (h) ausbilden.

## Claims

1. A process for sorting at least one target thermoplastic material from a mixture of solids containing a variety of types of thermoplastic materials, wherein this, in a mixed stream of solids (18) and in a sequence of operating steps using a transporting (13) and heating device (14), is first taken to a temperature at which the thermoplastic material with the lowest softening point, occasionally the target thermoplastic material, is converted into the plastic state, after which this is separated from the remaining portion of other types of plastic material by sorting,
characterised in that
the mixed stream of solids (18) emerging from the transporting (13) and heating device (14), containing mixed target thermoplastic materials in a selectively softened state and other non-softened thermoplastic materials, is conveyed, via a chute or under free fall with a contact force which can be produced by gravity and/or additional acceleration, to the loading and feeding region of a shredding device (4, 20) and the portion of softened target thermoplastic materials (12, 19, 32) is thereby collected and shredded and the remaining non-softened portion of the mixture of solids is taken away from the feeding region of the shredding device (4, 20) without being shredded.

2. A process according to Claim 1,
characterised in that
to sort by selectively feeding the target thermoplastic material to the shredding device (4, 20), on the one hand the plasticity of the target thermoplastic material is adjusted and on the other hand the shredding device used (4, 20) is a cutter blade (4) with surfaces which have teeth or indentations or knurls.

3. A process according to Claim 1 or 2,
characterised in that
shredding of the target thermoplastic material is performed by several continuous circulating saw wires or saw bands (24) forming a sawing plane (x-x) or by a mill saw (23), wherein these are arranged so that the material stream (18) emerging from the transporting (13) and heating device (14) is fed to the feed region (22) of the saw (23, 24) via a chute (15) or under free fall and the cutting angle (ε) of the saws (23, 24), their running direction and/or speed and the width of the gap between the individual sawing blades are mutually adjusted in accordance with the particle size of the mixture of solids and the plastic behaviour of the material components in the mixture of solids.

4. A process according to one or more of Claims 1 to 3,
characterised in that
the temperature of the shredding device (4, 20) is controlled during operation.

5. A process according to one or more of Claims 1 to 4,
characterised in that
adhering particles of plastic are removed from the shredding devices by scraping devices such as brushes etc.

6. A process according to one or more of Claims 1 to 5,
characterised in that
several shredding devices (4, 20) are arranged in series in such a way that in particular in the case of a saw, several sawing planes (x-x) produce rhomboidal passages with each other.

7. A process according to one or more of Claims 1 to 6,
characterised in that
a twin-shaft cutting machine is used as the shredding device (4, 20) which has circular, intermeshing cutter blades (4), arranged on shafts parallel to the axis, which form a feed angle (α) and a feed depth (h) which depends on this angle (α).

## Revendications

1. Procédé pour le triage d'une matière thermoplastique déterminée d'un mélange de différents types de matière thermoplastique, ce mélange étant d'abord porté à une température à laquelle la matière thermoplastique ayant la température de ramollissement la plus basse, éventuellement la matière thermoplastique déterminée, est amenée à l'état plastique, dans un flux de mélange (18), selon une séquence d'étapes opératoires, en faisant appel à un dispositif de transport (13) et de chauffage (14), cette matière thermoplastique étant ensuite séparée des autres fractions d'autres matières synthétiques par triage,
caractérisé en ce qu'on envoie le flux de mélange (18) venant du dispositif de transport (13) et de chauffage (14) et comportant les matières thermoplastiques sélectivement portées à l'état ramolli ainsi que d'autres matières thermoplastiques non ramollies, par un plan incliné ou en chute libre, moyennant une force de pression générable par gravité et/ou une accélération supplémentaire, contre la zone de chargement et d'admission d'une installation de fragmentation (4,20), et en ce qu'on saisit les fractions de matière thermoplastique déterminée ramollie (12,19,32), on les fragmente et en ce qu'on évacue les autres fractions non ramollies du mélange, à l'état non fragmenté, de la zone d'admission de l'installation de fragmentation (4,20).

2. Procédé selon la revendication 1 caractérisé en ce que, pour le triage par admission sélective de la matière thermoplastique déterminée dans l'installation de fragmentation (4,20), on règle la plasticité de la matière thermoplastique déterminée, d'une part, et on utilise des couteaux (4) à surface dentée ou munie de cannelures ou moletages, d'autre part.

3. Procédé selon la revendication 1 ou 2 caractérisé en ce qu'on effectue la fragmentation de la matière thermoplastique déterminée à l'aide de plusieurs fils ou bandes de scie sans fin (24) formant un plan de sciage (x-x) ou à l'aide d'une scie alternative à cadre (23), ceux-ci étant agencés de telle sorte que le flux de mélange (18) venant du dispositif de transport (13) et de chauffage (14) est amené par un plan incliné (15) ou en chute libre dans la zone de chargement (22) de la scie (23,24) et l'angle de coupe (ε) des scies (23,24), le sens de marche et/ou la vitesse de celles-ci ainsi que l'écart entre les diverses lames de scie étant adaptés à la dimension des particules du mélange et au comportement plastique des composantes du mélange.

4. Procédé selon l'une ou plusieurs des revendications 1 à 3 caractérisé en ce que le dispositif de fragmentation (4,20) est équilibré en température.

5. Procédé selon l'une ou plusieurs des revendications 1 à 4 caractérisé en ce qu'on nettoye les dispositifs de fragmentation à l'aide de dispositifs de raclage, tels que des brosses etc., des particules de matière synthétique adhérantes.

6. Procédé selon l'une ou plusieurs des revendications 1 à 5 caractérisé en ce qu'on agence plusieurs dispositifs de fragmentation (4,20) l'un derrière l'autre de telle sorte que, notamment dans le cas d'une scie, plusieurs plans de sciage (x-x) forment entre eux des passages en forme de losange.

7. Procédé selon l'une ou plusieurs des revendications 1 à 6 caractérisé en ce qu'on utilise, à titre de dispositif de fragmentation (4,20), une installation de coupe à deux arbres, qui comporte des couteaux circulaires (4) qui sont agencés sur des arbres à axes parallèles de façon à s'emboîter les uns entre les autres, et qui forment entre eux un angle d'admission (α) et, en fonction de cet angle (α), la profondeur d'admission (h).
